# EUROPEAN PATENT APPLICATION

(11) **EP 3 690 198 A1**
(43) Date of publication of application: **05.08.2020**
(21) Application number: 20150207.7
(22) Date of filing: 03.01.2020
(51) Int. Cl.: F01D 25/02

(54) **DE-ICING SYSTEM FOR VANES IN A GAS TURBINE ENGINE AND CORRESPONDING DE-ICING METHOD**

(30) Priority: 29.01.2019 GB 201901172
(71) Applicant: Rolls-Royce plc, London N1 9FX (GB)
(72) Inventor: Karapurath, Neelambaran, Derby, Derbyshire DE24 8BJ (GB); Friend, Gareth, Derby, Derbyshire DE24 8BJ (GB)
(74) Representative: Rolls-Royce plc

(57) **Abstract**

A de-icing system for one or more vanes (48) of a gas turbine engine (10). The system comprises a vane (48) comprising an electrically and thermally conductive material (52) and a plurality of magnets (415) located circumferentially about a rotating shaft (45) and configured to be driven by the shaft in the circumferential direction (61) to generate a rotating magnetic field. The vane (48) has a composite structure that includes a core laminate layer of the thermally conductive material (52) located between two laminate layers (51, 53) of titanium, stainless steel or an alloy thereof. A portion (413) of the thermally conductive material (52) is located within the rotating magnetic field such that the conductive material is directly heated by electromagnetic induction.

## Description

### Field of the disclosure

The present disclosure relates to a de-icing system for a gas turbine engine, particularly a vane of a gas turbine engine.

### Background

Control of fluid (e.g. gas) flows through a gas turbine engine is important to achieve efficiency and performance. Existing gas turbine engines comprise variable inlet guide vanes (VIGVs) and variable stator vanes to direct and present working fluid flows, e.g. to and from the compressor and turbine stages of the engine. In some cases, each vane comprises an aerofoil cross-section, with an integral spindle to allow for rotation to modify the incidence of fluid flowing by the plurality of vanes.

The variable inlet guide vanes and the variable stator vanes present a potential location for the accretion of ice, which can disrupt the flow of the working fluid or obstruct the motion of the vanes, thereby reducing the performance of the engine or causing compressor stall or surge. Furthermore, ice formed on the vanes can break away therefrom in a process known as "shedding", which can cause ice impacts that damage subsequent stages of the engine such as rotor blades downstream of the vanes.

Many systems have been developed in attempts to reduce the formation of ice on the vanes or to minimise the damage caused by shedding from the vanes. For example, it is known to redirect hot, high-pressure air from, e.g., a compressor of the gas turbine engine to the vanes themselves for heating them by convection. However, this typically requires a network of passageways, e.g. pipes/air ducts, to be provided within the engine casing structure to bleed air from the source of heat energy to the locations of the vanes, which takes up a large amount of space in the engine and adds significant weight. Also, the vanes are typically manufactured with a number of internal channels that direct the high pressure air, which can adversely affect their overall stiffness and introduce a risk of developing internal cracks. This system also needs a high amount of maintenance to keep it in working order, as there is a risk of any water that is accumulated in the passages post engine shutdown forming ice that can block the flow intended to de-ice the vane during engine start-up.

The present disclosure seeks to provide a de-icing system that addresses the above issues or at least provides a useful alternative.

### Summary

The present disclosure provides a de-icing system, a gas turbine engine, and a de-icing method as set out in the appended claims.

According to a first aspect there is provided a de-icing system for one or more vanes of a gas turbine engine, the de-icing system comprising: a vane comprising an electrically and thermally conductive material; and a plurality of magnets located circumferentially about a rotor shaft of the gas turbine engine and configured to be driven by the rotor shaft in the circumferential direction to generate a rotating magnetic field in a space within the gas turbine engine; wherein the vane has a composite structure that includes a core laminate layer of the conductive material located between two laminate layers of titanium, stainless steel or an alloy thereof, and.at least a portion of the conductive material is located within the space and is configured to be relatively stationary within the rotating magnetic field so as to be heated by electromagnetic induction, for inhibiting the accretion of ice on the vane.

In this way, the technology described herein generates thermal energy within the vanes directly from a rotating magnetic field in a space which may be proximate the vanes. In other words, a portion of the rotational energy of the shaft is directly converted into heat at the vanes. This is more efficient than hypothetical arrangements in which heat is transferred to the vanes from a remote source via passageways that are susceptible to heat loss.

Directly converting rotational energy of the shaft into heat at the vanes also obviates the need for a network of passageways that supply hot bleed air to the vanes from a remote source, thereby providing a more space-efficient system. This may provide additional space in, e.g., the casing for other components within the gas turbine engine. Furthermore, the de-icing system of the technology described herein has a relatively simple construction as compared to hypothetical arrangements in which a network of passageways is provided for supplying hot bleed air to the vanes for heating by convection. It may also provide a more reliable system with lower maintenance.

Additionally, the technology described herein reduces the extent of ice shedding from the vanes, which allows the thickness and overall mass of subsequent rotor sections to be reduced as compared to hypothetical arrangements in which rotor sections are designed to withstand the force of large ice impacts. Thus, the technology described herein provides a de-icing system that allows the weight of the engine to be reduced as compared to conventional systems. This enables reduced specific fuel consumption (SFC) and therefore provides improved efficiency and improved economy whilst being more environmentally-friendly.

It will be appreciated that the term "de-icing" is to be construed as being effective to reduce the formation/accretion of ice in the first place and also to remove or reduce the amount of ice after its formation.

The vane may be a variable inlet guide vane of the gas turbine engine. Alternatively, the vane may be a variable stator vane of the gas turbine engine.

The vane may comprise a laminate layer of the (electrically and thermally) conductive material.

The conductive material may be copper or aluminium. This may serve to increase the electrical and thermal conductivity of the vane.

In some embodiments the two laminate layers are titanium.

The vane may contain a reservoir of a heat-transfer liquid.

The plurality of magnets may be permanent magnets.

The plurality of magnets may be arranged by alternating polarity in the circumferential direction.

The shaft may be a high-pressure shaft or an intermediate-pressure shaft of the gas turbine engine.

According to a second aspect there is provided a gas turbine engine that includes a de-icing system according to any one of the statements contained herein.

According to a third aspect there is provided a de-icing method for one or more vanes of a gas turbine engine, the method comprising the steps of: providing a vane that comprises an electrically and thermally conductive material; generating a rotating magnetic field in a space within the gas turbine engine by the rotation of a plurality of magnets located circumferentially about and driven by a rotating shaft of the gas turbine engine; and maintaining a portion of the conductive material of the vane within the space at a relatively stationary location with respect to the rotating magnetic field, thereby heating the portion by electromagnetic induction.

As noted elsewhere herein, the present disclosure relates to a de-icing system for a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a close up sectional side view of a compressor section of a gas turbine engine in accordance with the technology described herein;
**Figure 5** schematically illustrates a cross-sectional view of a guide vane having a composite structure in accordance with the technology described herein;
**Figure 6** schematically illustrates a close up sectional front view of the disc and the plurality of permanent magnets described with respect to Figure 4; and
**Figure 7** is a flow chart schematically illustrating a method of de-icing a guide vane of a gas turbine engine.

### Detailed description

Aspects and embodiments of the present disclosure will now be discussed with reference to the accompanying figures. Further aspects and embodiments will be apparent to those skilled in the art.

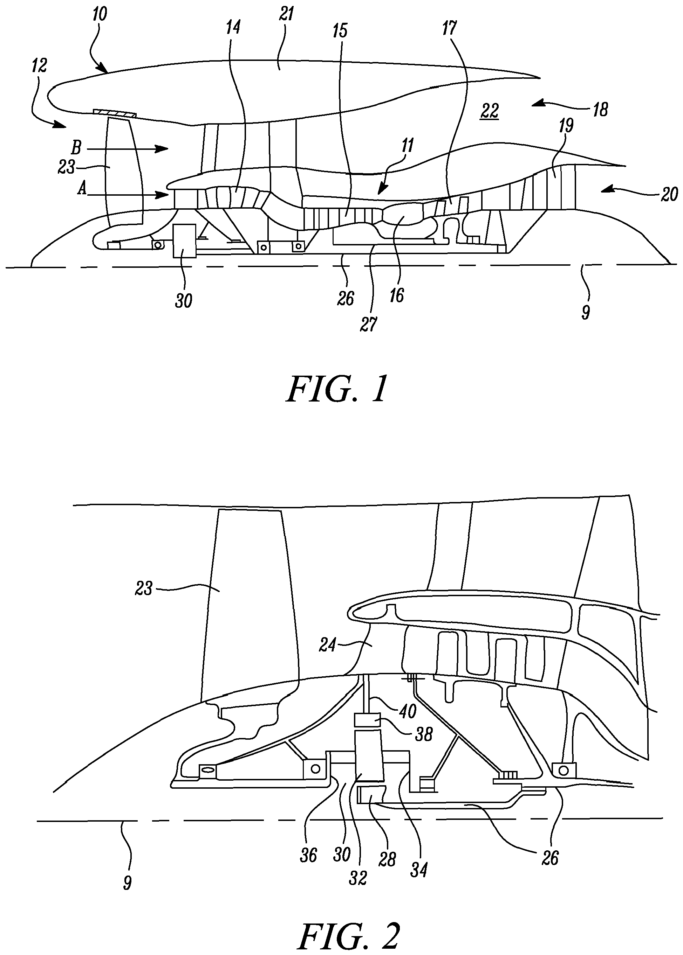

**Figure 1** illustrates a gas turbine engine 10 having a principal rotational axis 9 (aka engine axis). The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

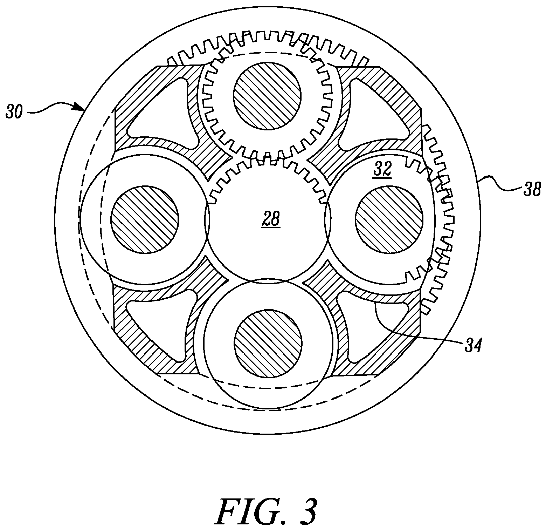

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

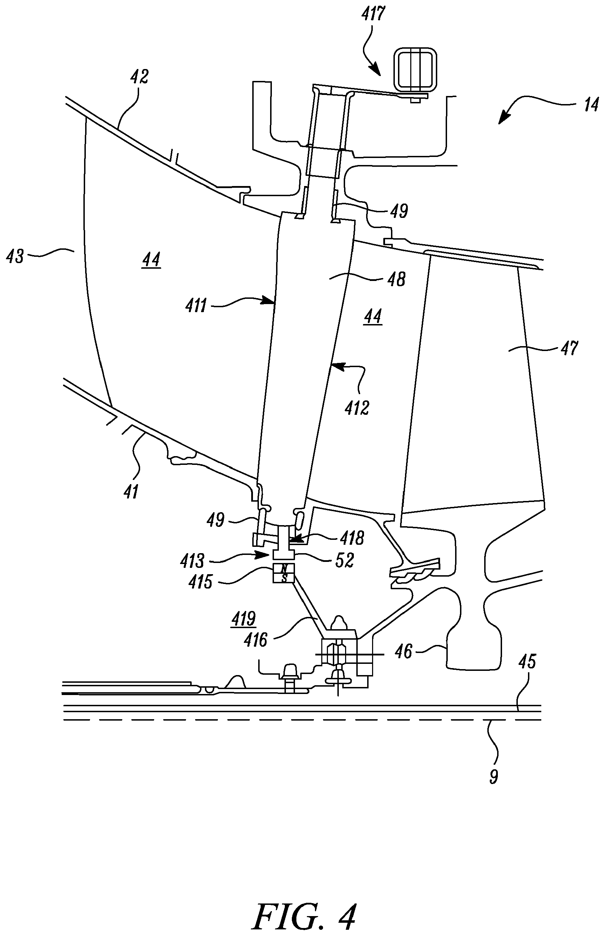

**Figure 4** is a close up sectional side view of a compressor section of a gas turbine engine, such as the low pressure compressor 14 described with respect to Figures 1 and 2.

The low pressure compressor 14 comprises a radially inner casing 41 and a radially outer casing 42 that are stationary and held apart in the radial direction by a stationary supporting structure 43. The radially inner and outer casings 41, 42 define a flowpath 44 there between for receiving the core airflow A to be accelerated and compressed by the low pressure compressor 14, as described with respect to Figure 1.

The compressor 14 also comprises a rotor structure comprising a rotor shaft 45 which is centred about the principal rotational axis 9, and a disc 46 mounted thereon (by conventional means) for rotation about the principal rotational axis 9. Attached along the radially outer circumference of the disc 46 is a plurality of compressor blades 47 extending in the radial direction, although only one such compressor blade 47 is shown here for clarity. During operation, the rotor structure is driven at high speed, e.g. by the low pressure turbine (not shown), such that the compressor blades 47 rotate and impart energy to the airflow passing through the compressor 14.

As can be seen in Figure 4, the low pressure compressor 14 comprises a variable inlet guide vane 48 disposed between the inner and outer casing 41, 42 such that an aerofoil portion thereof is disposed within the flowpath 44. The variable inlet guide vane 48 has a leading edge 411 and a trailing edge 412. Although only a single guide vane 48 is shown in Figure 4, it will be appreciated that the compressor 14 will include a plurality of such guide vanes 48 arranged circumferentially about the inner casing 41.

The guide vane 48 is rotatable about a rotational axis for controlling the airflow within the flowpath 44 to achieve efficient engine and compressor operation. For example, at low engine speed, the variable inlet guide vane 48 may be rotated to reduce the incidence of airflow onto the compressor blades 47 to tolerable angles. In order to achieve such rotation, each of the vanes 48 is mounted in a bush 49 in the inner casing 41 and a corresponding bush 49 in the outer casing 42. The vane 48 also has a lever 417 (or other linkage) fitted to its outer end on the outer side of the outer casing 42. The levers 417 of the plurality of variable inlet guide vanes 48 may be connected to a common unison ring (as known in the art) so that, when the unison ring is rotated, so do the vanes 48.

The variable inlet guide vane 48 often experiences icing conditions and is therefore susceptible to ice accretion. Accordingly, there is provided a de-icing system for inhibiting the formation of ice and reducing the amount of ice after its formation on the guide vane 48. However, in contrast to conventional systems in which the guide vanes are heated by hot air bled from the compressor, the system of the technology described herein heats the guide vanes by electromagnetic induction heating of an electrically and thermally conductive material that forms part of the guide vane.

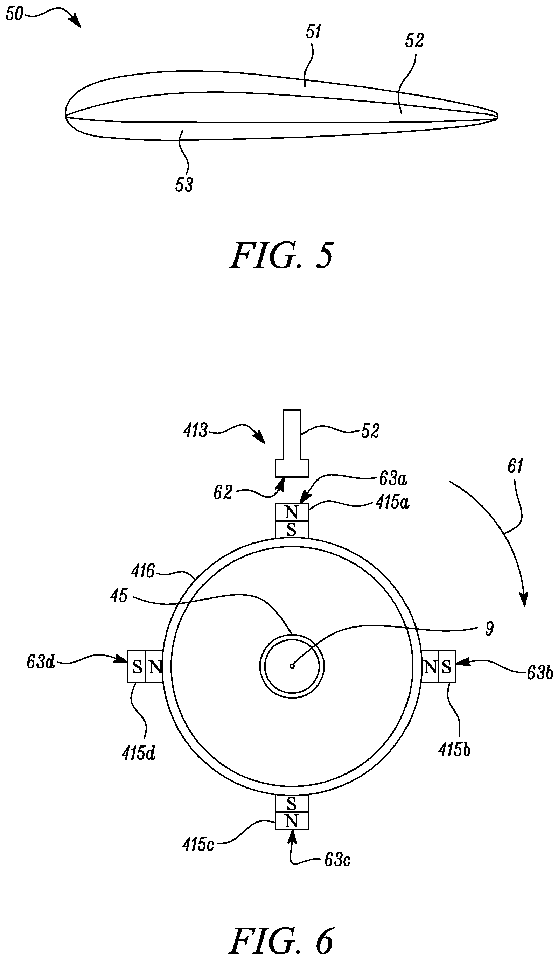

The variable inlet guide vane 48 has a solid (i.e. non-hollow) three-ply composite structure. This structure may have the effect of increasing the integrity and robustness of the guide vane, as compared to hypothetical systems which introduce internal channels within the guide vanes to direct a flow of heating liquid there through. As best shown in Figure 5, the guide vane 48 includes a core laminate layer of electrically and thermally conductive material 52 sandwiched between a first outer laminate layer 51 and a second outer laminate layer 53. The core laminate layer of electrically and thermally conductive material 52 may be copper or aluminium alloy and the first and second outer laminate layers 51, 53 may be titanium, stainless steel or an alloy thereof (e.g. Jethete™ stainless steel alloy or Custom 450 stainless steel alloy available from Magellan Metals). The outer laminate layers may serve to increase the strength of the guide vane. In other embodiments, however, the variable inlet guide vane 48 may comprise a single-piece construction of conductive material, instead of a composite construction.

Referring back to Figure 4, a portion 413 of the conductive material 52 at a radially inner side of the guide vane 48 extends from the inner and outer laminate layers and protrudes from the bush 49 through a hole 418 in the inner casing 41 to a space 419 which is to be subjected to a rotating magnetic field to directly heat the protruding portion 413 by induction heating. As mentioned above, the rotating magnetic field is generated by a plurality of permanent magnets 415, only a first of which is shown in Figure 4, which are located circumferentially about the rotor shaft 45 and configured to be driven by the rotor shaft 45 in the circumferential direction. The plurality of permanent magnets 415 are attached to the rotor shaft 45 of the rotor structure via a disc 416 that is bolted to the rotor shaft 45.

Each one of the plurality of permanent magnets 415 comprises a ferromagnetic core having two poles, a South pole at a first end of the magnet 415 and a North pole at a second end of the magnet 415 opposite the first end. As such, each permanent magnet 41 can be said to have a magnetic polarity in a direction from the South pole to the North pole.

As best shown in **Figure 6**, the plurality of permanent magnets 415 are fixed on a radially outer surface of the disc 416 in an arrangement where each permanent magnet 415 is at a position that is equidistant between its two closest neighbouring magnets 415. It will be appreciated that although Figure 6 shows only four permanent magnets 415 fixed to the disc 416, in practice this number may be much greater.

The disc 416 has a radial extend from the rotor shaft 45 such that the plurality of permanent magnets 415 are disposed radially inwards of the protruding portion 413 and such that the protruding portion 413 is located within a rotational plane of the plurality of permanent magnets 415. Alternatively, the plurality of permanent magnets may be disposed at, e.g., the same radial position as the protruding portion, but offset therefrom (i.e. offset from the rotational plane) in the axial direction, for more efficient use of space. The plurality of permanent magnets 415 create a magnetic field of a magnitude suitable for extending across a gap (radial or axial gap) between the permanent magnets 415 and the protruding portion 413.

The plurality of permanent magnets 415 are arranged in a facing arrangement with the protruding portion 413, such that when each permanent magnet 415 is at the same angular position about the rotor shaft 45 as the protruding portion 413, e.g. only, one pole of the magnet will face and confront a corresponding surface 62 of the protruding portion 415. The corresponding surface 62 may have the same surface area as an end surface 63 of the magnet 415 that defines the pole in question. The corresponding surface 62 and the end surface 63 may be parallel to each other when at the same angular position. This facing arrangement may increase the number of magnetic field lines of each magnet 415 that are cut by the protruding portion 413 during rotation of the permanent magnets 415, e.g. as compared to hypothetical arrangements in which the magnets are arranged in a non-facing arrangement where a magnetic pole of the magnet does not confront the protruding portion 413.

A first permanent magnet 415a of the plurality of magnets 415 is oriented such that its North pole faces and confronts the protruding portion 413 in the radial direction perpendicular to the principal rotational axis 9. However, a second permanent magnet 415b, which is adjacent to the first permanent magnet 415a in the circumferential direction 61, is oriented such that its South pole will face and confront the protruding portion 413 in the radial direction. This pattern of permanent magnets having alternating North and South poles facing the protruding portion 413 is repeated for all of the plurality of permanent magnets located circumferentially about the rotor shaft 45. Alternating the polarity of the plurality of permanent magnets 415 may maximise the variation in magnetic field strength about the circumference of the rotor shaft 45, to increase the extent of electromagnetic induction.

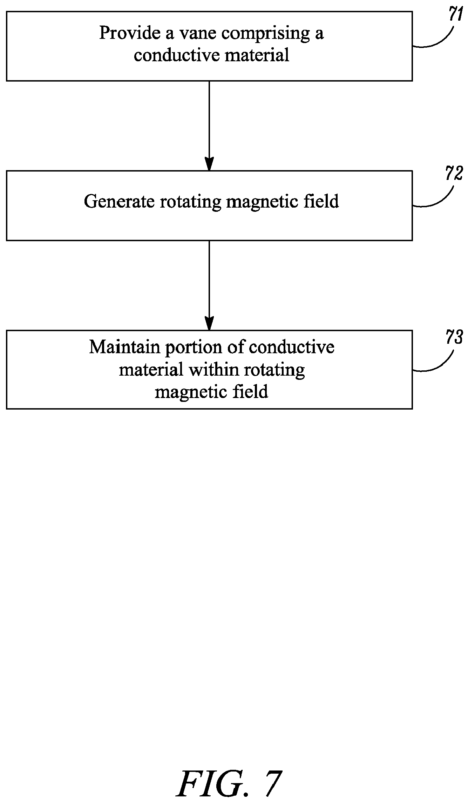

Turning to **Figure 7**, the de-icing system described above with respect to Figures 4 to 6 is used to de-ice one or more guide vanes 48 of a gas turbine engine.

The method begins at step 71 by providing or assembling the de-icing system in a gas turbine engine. This includes providing a vane having an electrically and thermally conductive material 52. The de-icing method then proceeds to step 72, at which point the rotor shaft 45 is driven to rotate about the axis 9. This rotation in turn drives the plurality of permanent magnets to rotate around the axis 9, thereby causing the magnetic field to rotate in a space 419 that is proximate a portion of the conducive material 52. At step 73, the protruding portion 413 of the guide vane is maintained at a position within space 419 and therefore the rotating magnetic field during rotation of the rotor shaft 45, such that the protruding portion 413 remains relatively stationary within the rotating magnetic field. The protruding portion 413 remains relatively stationary with respect to the rotating magnetic field in that it is fixed to a stator structure of the engine, such as the inner and outer casing 41, 42 described above with respect to Figure 4. In this way, the relatively stationary protruding portion 413 continuously cuts the magnetic field lines of the rotating magnetic field such that the protruding portion 413 is subjected to a continual fluctuation of positive and negative magnetic field intensity, thereby inducing Eddy currents in the conductive material 52 thus heating it.

The heat generated at the protruding potion 413 of the guide vane 48 may be effectively transferred uniformly through the vane 48 by selection of a conductive material 28 having sufficiently high thermal conductivity, such as Copper. However, heat transfer across the guide vane 48 may be further increased by including a reservoir of (non-halide) heat-transfer liquid within the hollow guide vane 48. This may be achieved by drilling a hole though the guide vane 48 and capping the hole after the heat-transfer liquid has been introduced, to seal the liquid inside.

Although the de-icing method of Figure 7 has been described above as having three distinct steps, it will be appreciated that the steps may be carried out substantially simultaneously.

It will also be appreciated that although the de-icing system has been described with respect to Figures 4 to 7 as having a plurality of magnets arranged in alternating polarity across the circumferential direction, this is not essential. For example, it would be possible to generate a magnetic field of varying intensity with a plurality of magnets having a common polarity with respect to the protruding portion, to induce Eddy currents in the conductive material. Furthermore, the plurality of magnets may be arranged circumferentially about the shaft according to a Halbach array.

It will also be appreciated that although the plurality of magnets have been described as being in a facing requirement with the protruding portion in Figures 4 to 7, the plurality of magnets and the protruding portion may be arranged at any desired position or orientation relative to each other, as long as the protruding portion is configured to be within the rotating magnetic field generated by the plurality of magnets to induce a current therein. Furthermore, although Figures 4 to 6 show a de-icing system for a single guide vane, it will be appreciated that a plurality of such guide vanes may have respective protruding portions configured to remain (e.g. stationary) within the rotating magnetic field created by the plurality of magnets rotated by the rotor shaft 45, for heating the guide vanes in the manner described above. Furthermore, although the de-icing system has been described with respect to a variable inlet guide vane, the technology described herein extends to any static vane, such as a variable stator vane of the gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A de-icing system for one or more vanes (48) of a gas turbine engine (10), the de-icing system comprising:
a vane (48) comprising an electrically and thermally conductive material (52); and
a plurality of magnets (415) located circumferentially about a rotor shaft (45) of the gas turbine engine and configured to be driven by the rotor shaft (45) in the circumferential direction (61) to generate a rotating magnetic field in a space (419) within the gas turbine engine (10);
wherein the vane (48) has a composite structure that includes a core laminate layer of the conductive material (52) located between two laminate layers (51, 53) of titanium, stainless steel or an alloy thereof, and.at least a portion (413) of the conductive material (52) is located within the space (419) and is configured to be relatively stationary within the rotating magnetic field so as to be heated by electromagnetic induction, for inhibiting the accretion of ice on the vane (48).

2. The de-icing system of claim 1, wherein the vane (48) is a variable inlet guide vane of the gas turbine engine (10).

3. The de-icing system of claim 1, wherein the vane (48) is a variable stator vane of the gas turbine engine (10).

4. The de-icing system as claimed in any preceding claim, wherein the conductive material (52) is copper or aluminium.

5. The de-icing system as claimed in any preceding claim, wherein the two laminate layers (51, 53) are titanium.

6. The de-icing system of any preceding claim, wherein the vane (48) contains a reservoir of a heat-transfer liquid.

7. The de-icing system of any preceding claim, wherein the plurality of magnets (415) are permanent magnets.

8. The de-icing system of any preceding claim, wherein the plurality of magnets (415) are arranged by alternating polarity in the circumferential direction (61).

9. The de-icing system of any preceding claim, wherein the rotor shaft (45) is a high-pressure shaft of the gas turbine engine (10).

10. The de-icing system of any one of claims 1 to 8, wherein the rotor shaft (45) is an intermediate-pressure shaft of the gas turbine engine (10).

11. A gas turbine engine (10) that includes a de-icing system according to any preceding claim.

12. A de-icing method for one or more vanes (48) of a gas turbine engine (10), the method comprising the steps of:
providing a vane (48) that comprises an electrically and thermally conductive material (52);
generating a rotating magnetic field in a space (419) within the gas turbine engine (10) by the rotation of a plurality of magnets (415) located circumferentially about and driven by a rotating shaft (45) of the gas turbine engine (10); and
maintaining a portion (413) of the conductive material (52) of the vane (48) within the space (419) at a relatively stationary location with respect to the rotating magnetic field, thereby heating the portion (413) by electromagnetic induction.
